# EUROPÄISCHE PATENTSCHRIFT

(11) **EP 0 802 009 B1**
(45) Veröffentlichungstag und Bekanntmachung des Hinweises auf die Patenterteilung: **09.12.1998**
(21) Anmeldenummer: 96106259.3
(22) Anmeldetag: 20.04.1996
(51) Int. Cl.: B23H 9/16, B23H 9/00, G01B 13/20

(54) **Verfahren zum elektrochemischen Bearbeiten von Strömungskanälen metallischer Werkstücke**
Method for electrochemical machining of flow channels in metallic workpieces
Méthode d'usinage électrochimique des canaux d'écoulement dans des pièces métalliques

(43) Veröffentlichungstag der Anmeldung: 22.10.1997
(73) Patentinhaber: Frembgen, Fritz-Herbert, D-87700 Memmingen (DE)
(72) Erfinder: Frembgen, Fritz-Herbert, D-87700 Memmingen (DE)
(74) Vertreter: Hübner, Hans-Joachim, Dipl.-Ing.

(56) Entgegenhaltungen:
- EP-A- 0 457 975
- WO-A-90/05039

## Beschreibung

Die Erfindung betrifft ein Verfahren zum elektrochemischen Bearbeiten von Strömungskanälen metallischer Werkstücke gemäß den Oberbegriffen der Ansprüche 1 und 2.

Derartige Verfahren sind Inhalt der WO-A-96/12586, die als Stand der Technik gemäß Art. 54 Abs.EPÜ 3 gilt. Diesem Stand der Technik liegt die Erkenntnis zugrunde, daß der Strömungswiderstand der sehr engen Düsenkanäle hauptsächlich von der Strömungsgeschwindigkeit und damit von der Druckdifferenz beeinflußt wird, diese also für die Reproduzierbarkeit von Kalibrierungen das bedeutendste Kriterium ist. In der WO-90/05039 wird zwar dieser Druckdifferenz nur eine untergeordnete Rolle zugestanden und beispielsweise der Viskositätsunterschied zwischen dem Elektrolyten und der den Düsenkörper später durchströmenden Betriebsflüssigkeit, z.B. Dieselöl für wichtiger gehalten. Tatsächlich aber haben Messungen ergeben, daß die Durchflußkennlinien von Elektrolytflüssigkeit und Prüföl mit zunehmendem Betriebsdruck eng beieinander liegen und praktisch parallel verlaufen, so daß die Durchflußänderung aufgrund unterschiedlicher Viskositäten bei hohen Betriebsdrücken in vielen Fällen vernachlässigbar ist und bei höchsten Genauigkeitsanforderungen sehr einfach rechnerisch kompensiert werden kann. Da die sich einstellende Druckdifferenz mit der Höhe des Primärdruckes zunimmt, können die Strömungswiderstände in den Düsen umso genauer gemessen und letztendlich kalibriert werden, je höher der Primärdruck ist.

Die nach dem gattungsgemäßen Verfahren hergestellten Düsenkörper, die z.B. für Einspritzpumpen verwendet werden, müssen Durchflußwerte beim Betriebsdruck innerhalb eines sehr engen Toleranzbereiches haben, der +/- 1 Prozent nicht überschreiten sollte. Bei der Serienherstellung der Düsenkörper nach dem gattungsgemäßen Verfahren kann dieses Ziel eingehalten werden. Sollten aber die Genauigkeitsanforderungen weiter steigen, reichen die bisherigen Verfahrensschritte nicht aus. Versuche haben nämlich gezeigt, daß auch bei genauer Einhaltung der Verfahrensvorschriften die bearbeiteten Düsenkörper hinsichtlich ihrer Durchflußwerte insbesondere bei hohem Betriebsdruck nach wie vor unterschiedlich sind.

Aufgabe der Erfindung ist es, die gattungsgemäßen Verfahren dahingehend zu verbessern, daß der Toleranzbereich der Strömungswiderstände der nach dem Verfahren bearbeiteten Werkstücke im späteren betrieblichen Einsatz weiter verkleinert wird.

Diese Aufgabe wird durch die Verfahrensschritte gemäß Anspruch 1 und in einer Variante gemäß Anspruch 2 gelöst.

Da eine möglichst kurze Gesamtbearbeitungsdauer der Düsenkörper angestrebt wird und sich diese aus sehr kurzen Bearbeitungsintervallen von z.B. 50 ms und erheblich längeren, für die Messungen notwendigen Arbeitspausen von z.B. 3 - 5 Sekunden zusammensetzt, versucht die Erfindung, die Meßzeiten so kurz wie möglich zu machen. Dies ist mit Druckmessungen eher möglich als mit einer Durchflußmessung, die auf dem integrierenden Meßprinzip basiert. Die beim gattungsgemäßen Verfahren verwendeten Kolbenpumpen zwingen der Elektrolytflüssigkeit Pulsationen auf. Die Druckschwankungen verlaufen über die Zeit gesehen sinusförmig und da kurze Meßzeiten angestrebt werden, muß man mit weniger als einer Sinus-Vollschwingung auskommen. Die Amplitudendifferenz des Druckverlaufes des Pumpendruckes liegt in der Größenordnung von 6 Prozent des mittleren Pumpendruckes. Je nach dem, in welchen Bereich des sinusförmigen Druckverlaufes die Druckmessung fällt ist der Meßwert größer oder kleiner. Die Unterschiede wachsen mit Verkürzung der Meßzeit. Erreichen die Pulsationen ungedämpft die Meßstelle könnten die Abweichungen zweier aufeinander folgender Messungen 5 Prozent betragen. Mit Nachschaltung eines Pulsationsdämpfers verbleiben aber immer noch Meßwertunterschiede in der Größenordnung von 1,5 Prozent oder mehr. Dank des erfindungsgemäßen Verfahrens, bei dem die Pumpe für die Elektrolytflüssigkeit vorzugsweise während der gesamten Bearbeitungsdauer abgeschaltet bleibt, die Elektrolytflüssigkeit somit ausschließlich vom Druckgaspolster gefördert wird, werden diese Meßfehler eliminiert, da im Elektrolyten keine Pulsationen mehr vorhanden sind.

Ein weiterer, in der Praxis immer wieder auftretender Kalibrierungsfehler wurde als Resonanzproblem erkannt und durch das erfindungsgemäße Verfahren ebenfalls eliminiert. Je nach Pumpenfrequenz und anschließender Druckleitungslänge steigen die Schwingungsamplituden der Flüssigkeitssäule in Resonanznähe stark an, so daß sogar mit Pulsationsdämpfung noch Meßfehler von 6 Prozent und mehr aufgetreten sind. Wurden also bisher bei der elektrochemischen Bearbeitung von Düsenkanälen die Druckmessungen zufällig in Resonanznähe vorgenommen, so überschritten die hergestellten Werkstücke auf unerklärliche Weise das Kalibriermaß und waren unbrauchbar. Die Erfindung vermeidet auch diesen Fehler.

Für einen Bearbeitungszyklus einer Gruppe von Düsenkörpern wird beispielsweise eine Elektrolytmenge von 3 Liter benötigt. Herkömmliche Kolbenpumpen sind ohne weiteres in der Lage, diese Elektrolytmenge während des Werkstückwechsels zu ergänzen, für den etwa 30 Sekunden angesetzt werden können.

Die erfindungsgemäßen Verfahren lassen sich so ausbilden, daß der Primärdruck des Elektrolytvorrates während der Bearbeitung ständig abfällt und diese sich ändernden Druckwerte während der Bearbeitungspausen und gleichzeitig die sekundären Druck- und/oder Volumendurchflußwerte stromab des Düsenkörpers gemessen werden, wobei die Meßwerte in einem Rechner zwischengespeichert und mit den entsprechenden Werten eines gespeicherten Kennlinienmusters verglichen und auf einen Sollprimärdruck umgerechnet werden, dessen sekundärseitiger Rechenwert die Beendigung der Bearbeitung bestimmt. Dieses Verfahren erlaubt eine sehr einfache Arbeitsvorrichtung, da das Gaspolster vom Elektrolytvorrat komprimiert wird, ein Kompressor für das Gaspolster also entbehrlich ist. In einer alternativen Weiterbildung der Erfindung wird der Primärdruck im Elektrolytvorrat konstant gehalten, indem dieser an einen Gasdruckkessel angeschlossen ist, der von einem Kompressor auf ein höheres Druckniveau geladen wird, als er im Elektrolytvorrat herrscht, wobei zwischen diesem und dem Gasdruckkessel ein Druckminderventil dafür sorgt, daß der Primärdruck des Elektrolyten während der Bearbeitungsdauer trotz abgeschalteter Elektrolytpumpe konstant bleibt. Wichtig ist, daß bei dieser Alternative der Kompressor mindestens während der Meßzeiten, also in den Bearbeitungspausen der Intervallbearbeitung abgeschaltet oder von dem Gasdruckkessel abgesperrt bleibt. Die primärseitige Druckmessung kann sowohl im Gasdruckpolster als auch in der Verbindungsleitung zum Gasdruckkessel wie auch in der Elektrolytleitung zur Bearbeitungsmaschine erfolgen.

Sekundärseitig, also stromab des bearbeiteten Düsenkörpers bzw. der Gruppe an Düsenkörpern kann die Messung entweder über den Druck mittels einer Druckmeßdose oder mengenmäßig mittels eines hochgenauen Durchflußmeßgerätes erfolgen. Im Falle der Druckmessung ist dem Düsenkörper in der Elektrolytflußbahn eine Drosselstelle nachgeschaltet und der Druck des Elektrolyten wird vor der Drosselstelle gemessen und - ggf. nach Umrechnung auf einen Sollprimärdruck als Abschaltkriterium für die elektrochemische Bearbeitung verwendet. Die Auswertung der Druckmessungen kann absolut erfolgen. Vorzugsweise wird jedoch eine Differenzdruckmessung verwendet.

Anhand der Zeichnung wird die Erfindung beispielsweise näher erläutert.

Es zeigt:
- FIG. 1: eine schematische Ansicht einer elektrochemischen Bearbeitungsanlage mit primärseitiger Druckmessung und sekundärseitiger Volumenmessung,
- FIG.2: eine Ansicht ähnlich FIG.1 bei der jedoch sekundärseitig nicht das Volumen, sondern der Druck gemessen wird,
- FIG.3: ein Diagramm mit Darstellung des ungedämpften Druckverlaufes einer Kolbenpumpe,
- FIG.4: eine Darstellung des Druckverlaufes ähnlich FIG. 3, jedoch mit Pulsationsdämpfer,
- FIG.5: ein Diagramm des Druckverlaufes des Elektrolyten während der Intervallbearbeitung gemäß der Erfindung,
- FIG.6: der über die Bearbeitungsdauer aufgetragene Verlauf der Durchflußmengen-Zunahme an Elektrolytflüssigkeit und
- FIG.7: eine typische Kennlinie, die die Abhängigkeit der Durchflußmenge vom Primärdruck zeigt

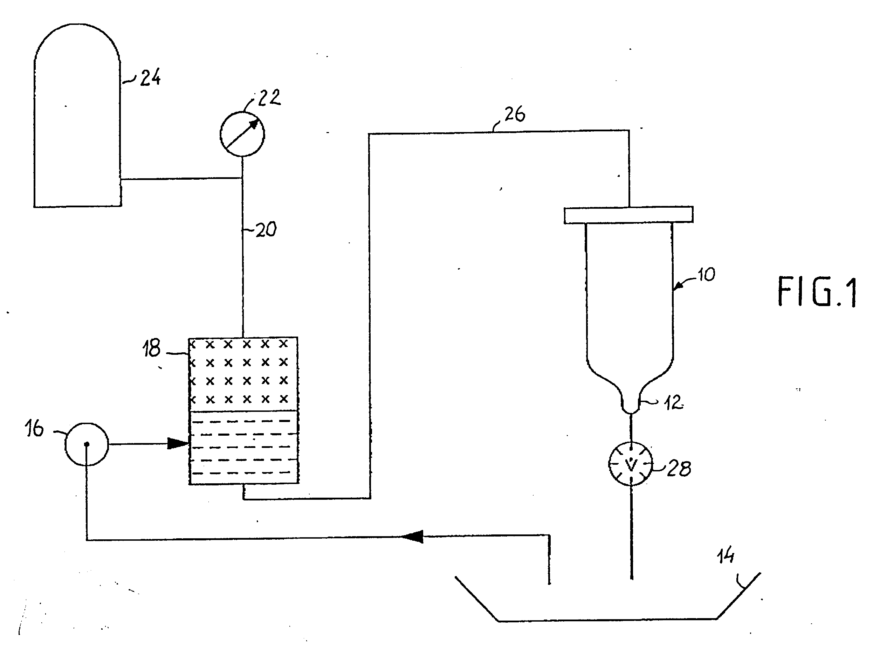

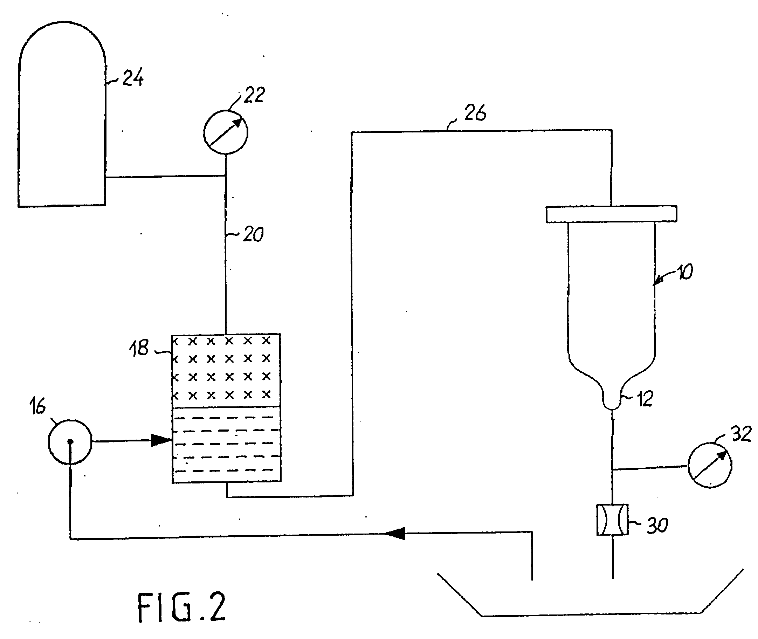

Mit 10 ist in den Figuren 1 und 2 ein gegenüber den weiteren Komponenten stark vergrößertes Werkstück 10 gezeigt, das in einer nicht gezeigten elektrochemischen Bearbeitungsanlage bearbeitet wird. Das Werkstück 10 ist ein Düsenkörper in dessen Dom 12 radiale Düsenkanäle angeordnet sind, die durch die elektrochemische Bearbeitung eingangsseitig kantengerundet und auf eine ganz bestimmte Durchflußmenge kalibriert werden. Unterhalb der elektrochemischen Bearbeitungsanlage befindet sich ein Elektrolyt-Auffangbehälter 14, aus dem eine Hochdruckpumpe 16 Elektrolytflüssigkeit in einen Vorratsbehälter 18 pumpt, der im oberen Teil mit einem Gas, beispielsweise Luft gefüllt ist. Eine in diesem oberen Teil mündende Verbindungsleitung 20, an die eine Druckmeßdose 22 angeschlossen ist führt zu einem Gasdruckkessel 24. Der Elektrolyt-Vorratsbehälter ist elektrolytseitig über eine Verbindungsleitung 26 mit dem Werkstück 10 verbunden. Die, das Werkstück 10 verlassende Elektrolytflüssigkeit strömt durch ein hochgenaues Durchflußmengenmeßgerät 28 und gelangt dann in den Auffangbehälter 14 zurück.

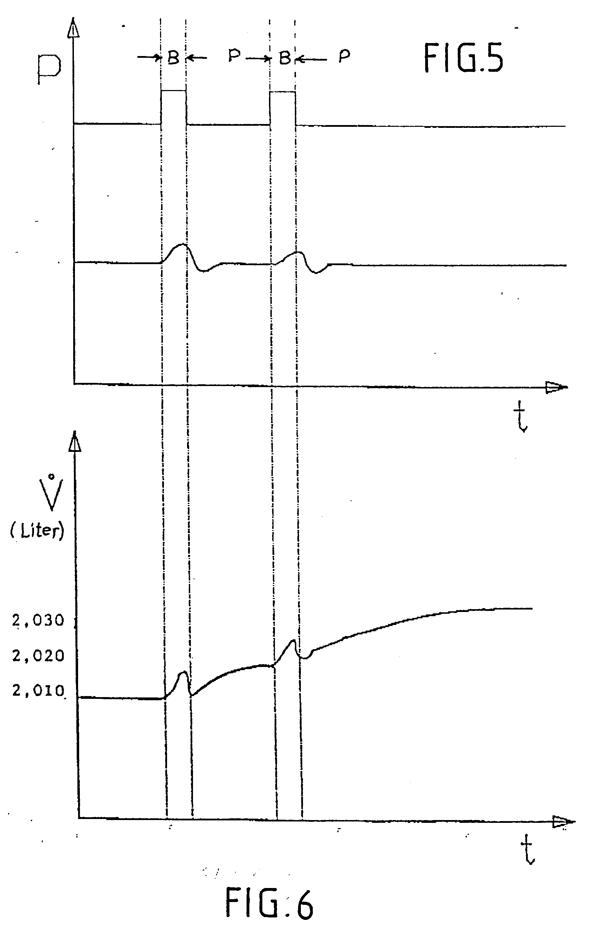

Während eine Gruppe an Werkstücken 10 in der Bearbeitungsmaschine mit den Arbeitselektroden bestückt werden, läuft die Pumpe 16, um aus dem Auffangbehälter 14 eine Elektrolytmenge von etwa 3 Litern in den Vorratsbehälter 18 zu fördern und dabei in diesem und in dem Gasdruckkessel 14 einen Druck von 110 bar aufzubauen. Sobald dieser Zustand erreicht ist schaltet die Pumpe 16 ab und mit einer gewissen Verzögerungszeit, die zum Abklingen der Pulsationen im Flüssigkeitssystem benötigt wird, findet die erste Bearbeitung in einem Zeitintervall B statt. Dabei steigt aufgrund der Gasblasenbildung der primärseitige Druck etwas an und vergleichmäßigt sich anschließend in der Bearbeitungspause P, die etwa 4 Sekunden benötigt. Dann folgt eine erneute kurze Bearbeitung B. Anschließend erfolgt eine weitere Pause P. In den Pausen P werden der Primärdruck durch das Meßgerät 22 und die Durchströmmenge am Mengenmeßgerät 28 gemessen und zwischengespeichert. Der Druckverlauf ist in FIG. 5 wiedergegeben, wobei hier allerdings von einem Konstantdruck ausgegangen wird, wie er bei der Anlage gemäß FIG. 2 erhalten wird. Durch das Abtragen von Material an den Düseneinlaßkanten erhöht sich mit zunehmender Bearbeitungsdauer der Durchfluß. Die Durchflußkennlinie ist in FIG. 6 veranschlaulicht, wobei auch hier zu sehen ist, daß in den Bearbeitungsintervallen B ein kurzfristiger Mengenstromanstieg erfolgt, der zu Fehlmessungen führen würde, wenn die Messungen in den Bearbeitungsintervallen erfolgen würden. Abgesehen von den Bearbeitungsintervallen sind der Druckverlauf und der Durchströmmengenverlauf stetig.

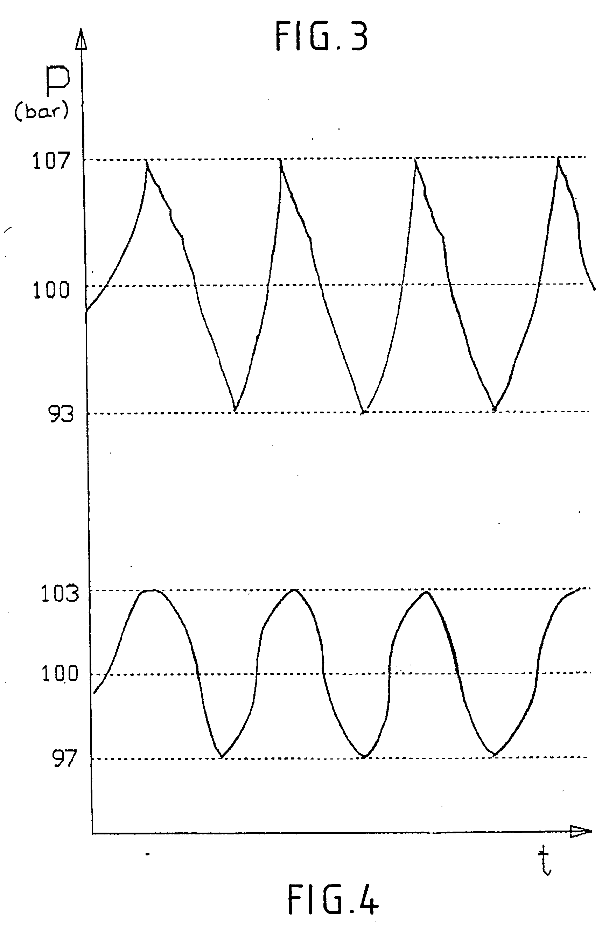

Die Firguren 3 und 4 erläutern dagegen die Druckverläufe im Elektrolyten, wenn die Pumpe 16 den Elektrolyten direkt in das Werkstück 16 pumpen würde, wobei gemäß Figur 3 Druckspitzen entstehen, deren Amplituden 7 Prozent vom Mittelwert nach beiden Richtungen ausmachen. Würde man beim herkömmlichen Verfahren einen Pulsationsdämpfer verwenden, würden die Druckspitzen gemäß FIG. 4 etwas abgebaut, wobei aber immer noch Pulsationsamplituden von insgesamt 6 Prozent zurückbleiben. Bei sehr kurzen Druckmessungen längs dieses Druckverlaufes sind also erhebliche Meßunterschiede unvermeidlich. Diese werden bei dem erfindungsgemäßen Verfahren völlig eliminiert.

Entspricht der mit dem Durchflußmengenmeßgerät 28 gemessene Meßwert einem vorher ermittelten Sollwert, wird die Bearbeitung beendet. Andernfalls findet eine weitere Bearbeitung statt mit nachfolgender erneuter Durchflußmengenmessung. Dieses Verfahren wird solange durchgeführt, bis der mit dem Meßgerät 28 gemessene Ist-Wert mit dem Soll-Wert übereinstimmt. Auf diese Weise wird ein Musterwerkstück geschaffen und die erforderlichen Strommengen werden für die anschließende Serienbearbeitung umgerechnet, so daß 2 oder höchstens 3 Bearbeitungsintervalle B nötig sind, um jeweils den Solldurchflußwert zu erreichen.

Alternativ ist es auch möglich von einem vorhandenen Musterwerkstück auszugehen, das mit eingebauter Elektrode an die Bearbeitungsmaschine angeschlossen wird, ohne das Werkstück jedoch zu bearbeiten. Es werden lediglich Druck und Elektrolytdurchfluß mit den Meßgeräten 22, 28 gemessen und diese Meßwerte werden dann als Sollwerte für die Serienbearbeitung verwendet.

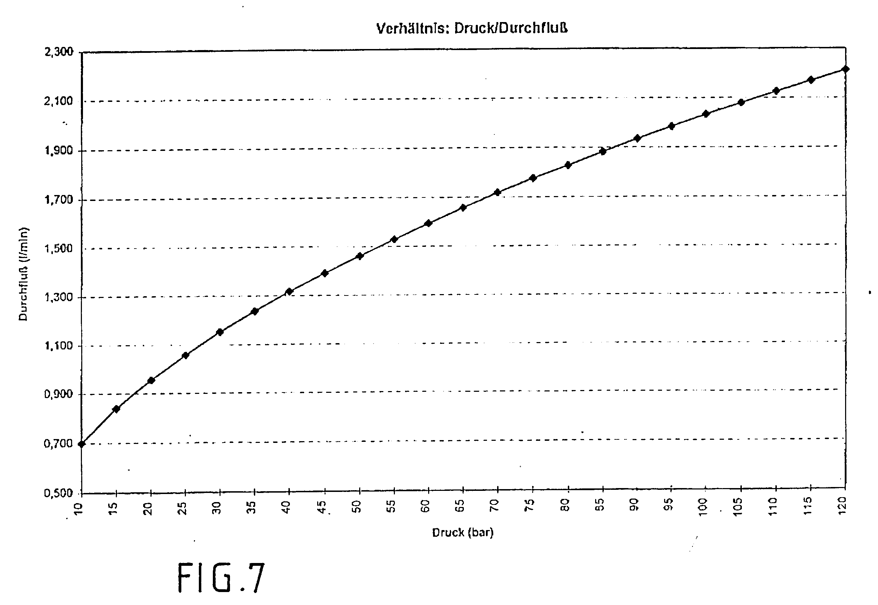

Da der Primärdruck während der ca. 15 Sekunden dauernden Bearbeitung geringfügig absinkt kann der, mit dem Meßgerät 28 gemessene effektive Durchflußwert nicht direkt für die Bestimmung des Bearbeitungsendes herangezogen werden, sondern muß auf einen konstanten Solldruck zurückgerechnet werden. Wie sich aus FIG. 7 ergibt besteht zwischen der Durchflußmenge und dem Primärdruck eine ab ca. 80 bar aufwärts lineare Abhängigkeit, so daß der gemessene Durchflußwert niedriger ist als der auf den Solldruck bezogene Durchflußwert. Mit einem eingebauten Mikroprozessor läßt sich diese Umrechnung jedoch leicht vornehmen.

Eine nicht dargestellte Alternative verwendet einen eigenen Kompressor, mit dem der Gasdruckkessel versorgt wird, um dort einen Überdruck gegenüber dem Primärdruck des Elektrolyten zu erzeugen. Ein in der Verbindungsleitung 20 eingebautes Reduzierventil sorgt dann dafür, daß der Elektrolytdruck im Vorratsbehälter 18 während der Bearbeitung konstant gehalten wird. Es versteht sich, daß der Kompressor genauso wie die Pumpe 16 während der Bearbeitung der Werkstücke stillsteht und nur während des Werkstückwechsels aktiv ist.

Die Anlage gemaß FIG. 2 unterscheidet sich dadurch, daß statt des Durchflußmengenmeßgerätes 28 sekundärseitig, also stromab des Werkstückes 10 eine Drosselstelle 30 in die Elektrolytflußbahn eingesetzt ist, die in der stromauf liegenden Elektrolytleitung einen Sekundärdruck erzeugt, der von einem Druckmeßgerät 32 gemessen wird. Bei einem Primärdruck von 100 bar liegt der Sekundärdruck etwa bei 10 bar. Aufgrund dieser ausreichend hohen Druckdifferenz werden ebenfalls hohe Geschwindigkeiten des Elektrolyten im Werkstück erzeugt mit denen eine besonders präzise Messung des Strömungswiderstandes möglich ist.

## Patentansprüche

1. Verfahren zum elektrochemischen Bearbeiten von Strömungskanälen metallischer Werkstücke, insbesondere von, enge Strömungskanäle aufweisenden Düsenkörpern mittels in diese eintauchender Werkzeuge und einem Elektrolytstrom zwischen dem Werkzeug und dem Strömungskanal, wobei ein Werkstück (10) in einem Probelauf elektrochemisch bearbeitet wird und mindestens einer, der den Volumenstrom des Elektrolyten und dessen Druck umfassenden physikalischen Elektrolytwerte gemessen und zwischengespeichert wird und das Werkstück (10) mit Prüföl unter hohem Druck kalibriert wird, indem der Istdurchfluß ermittelt und mit einem Solldurchfluß verglichen wird und bei Abweichungen beider Durchflußwerte weitere Probeläufe durchgeführt werden, bis beim Kalibrieren der lstdurchfluß mit dem Solldurchfluß übereinstimmt, wobei der aus dem letzten Probelauf ermittelte Elektrolytwert als Sollwert gespeichert und für die anschließende Serienbearbeitung der Werkstücke (10) als Regelgröße für die Beendigung der Bearbeitungen verwendet wird, wobei der Druck des Elektrolyten während der elektrochemischen Bearbeitung in den Probeläufen und bei der Serienbearbeitung in der Größenordnung von 100 bar gehalten wird und die elektrochemische Bearbeitung in mehreren Bearbeitungsschritten mit dazwischenliegenden Pausen erfolgt, in denen der Elektrolytdurchfluß aufrechterhalten wird und die Messung der Elektrolytwerte nur in den Pausen erfolgt, wobei der zum Werkstück (10) strömende Elektrolyt aus einem Elektrolytvorrat stammt, der unter einem komprimierten Gaspolster steht, und daß der Elektrolytvorrat von einer Pumpe (16) nachgeladen wird, die mindestens während der Pausen (P) zwischen den elektrochemischen Bearbeitungsschritten (B) abgeschaltet oder gegenüber dem Elektrolytvorrat abgesperrt ist.

2. Verfahren zum elektrochemischen Bearbeiten von Strömungskanälen metallischer Werkstücke, insbesondere von, enge Strömungskanäle aufweisenden Düsenkörpern mittels in diese eintauchender Werkzeuge und einem Elektrolytstrom zwischen dem Werkzeug und dem Strömungskanal, wobei mindestens einer, der den Volumenstrom des Elektrolyten und dessen Druck umfassenden physikalischen Elektrolytwerte des Elektrolytstromes in einem mit Prüföl unter hohem Druck vorher kalibrierten Referenz-Musterwerkstück gemessen und der ermittelte Elektrolytwert als Sollwert gespeichert und für die anschließende Serienbearbeitung der Werkstücke (10) als Regelgröße für die Beendigung der Bearbeitungen verwendet wird, wobei der Druck des Elektrolyten während der elektrochemischen Serienbearbeitung der Werkstücke in der Größenordnung von 100 bar gehalten wird und die elektrochemische Bearbeitung in mehreren Bearbeitungsschritten mit dazwischenliegenden Pausen erfolgt, in denen der Elektrolytdurchfluß aufrechterhalten wird und die Messung der Elektrolytwerte nur in den Pausen erfolgt, wobei der zum Werkstück (10) strömende Elektrolyt aus einem Elektrolytvorrat stammt, der unter einem komprimierten Gaspolster steht, und daß der Elektrolytvorrat von einer Pumpe (16) nachgeladen wird, die mindestens während der Pausen (P) zwischen den elektrochemischen Bearbeitungsschritten (B) abgeschaltet oder gegenüber dem Elektrolytvorrat abgesperrt ist.

3. Verfahren zum elektrochemischen Bearbeiten von Strömungskanälen metallischer Werkstücke nach Anspruch 1 oder 2, **dadurch gekennzeichnet, daß** der Primärdruck des Elektrolytvorrates (18) während der Bearbeitung ständig abfällt und die sich ändernden Druckwerte während der Bearbeitungspausen (P) und gleichzeitig die sekundärseitigen Druck- und/oder Volumendurchflußwerte stromab des Werkstückes (10) gemessen werden, daß die gemessenen Werte in einem Rechner zwischengespeichert und mit den entsprechenden Werten eines gespeicherten Kennlinienmusters verglichen und auf einen Sollprimärdruck umgerechnet werden, dessen sekundärseitiger Rechenwert die Beendigung der Bearbeitung bestimmt.

4. Verfahren zum elektrochemischen Bearbeiten von Strömungskanälen metallischer Werkstücke nach einem der Ansprüche 1 bis 3, **dadurch gekennzeichnet, daß** in der Elektrolytflußbahn dem Werkstück (10) eine Drosselstelle (30) nachgeschaltet ist und der Druck des Elektrolyten vor der Drosselstelle (30) gemessen und ggf. nach Umrechnung auf einen Sollprimärdruck als Abschaltkriterium für die elektrochemische Bearbeitung verwendet wird.

5. Verfahren zum elektrochemischen Bearbeiten von Stromungskanälen metallischer Werkstücke nach Anspruch 1 oder 2, **dadurch gekennzeichnet, daß** der Elektrolytvorrat an einen Gasdruckkessel (24) angeschlossen ist, der von einem Kompressor auf ein höheres Druckniveau geladen wird, als er im Elektrolytvorrat herrscht, daß zwischen diesem und dem Gasdruckkessel ein Druckminderventil angeordnet ist, welches im Elektrolytvorrat einen konstanten Primärdruck aufrecht erhält und daß der Kompressor mindestens während der Bearbeitungspausen (P) abgeschaltet oder von dem Gasdruckkessel (24) abgesperrt ist.

## Claims

1. A process for the electrochemical treatment of flow ducts of metallic workpieces, in particular of nozzle bodies having narrow flow ducts, by means of tools entering the said nozzle bodies and an electrolyte flow between the tool and the flow duct, wherein a workpiece (10) is treated electrochemically in a test run and at least one of the physical electrolyte values covering the volume flow of the electrolyte and the pressure thereof is measured and temporarily stored, and the workpiece (10) is calibrated with test oil at high pressure, whilst the actual throughflow is determined and compared with a nominal throughflow and further test runs are performed with deviations of the two throughflow values, until the actual throughflow coincides with the nominal throughflow in the calibration, wherein the electrolyte value determined from the last test run is stored as a nominal value and is used as a regulating variable for the subsequent series treatment of the workpieces (10) in order to conclude the treatments, wherein the pressure of the electrolyte is maintained in the order of magnitude of 100 bar in the test runs and in the series treatment during the electrochemical treatment, and the electrochemical treatment takes place in a plurality of treatment steps with intermediate pauses in which the electrolyte throughflow is maintained and the electrolyte values are measured only in the pauses, wherein the electrolyte flowing to the workpiece (10) originates from an electrolyte reservoir which is acted upon by a compressed gas cushion, and the electrolyte reservoir is subsequently charged by a pump (16) which is switched off at least during the pauses (**P**) between the electrochemical treatment steps (**B**) or is closed off from the electrolyte reservoir.

2. A process for the electrochemical treatment of flow ducts of metallic workpieces, in particular of nozzle bodies having narrow flow ducts, by means of tools entering the said nozzle bodies and an electrolyte flow between the tool and the flow duct, wherein at least one of the physical electrolyte values of the electrolyte flow covering the volume flow of the electrolyte and the pressure thereof is measured in a reference sample workpiece calibrated beforehand with test oil at high pressure and the electrolyte value determined is stored as a nominal value and is used as a regulating variable for the subsequent series treatment of the workpieces (10) in order to conclude the treatments, wherein the pressure of the electrolyte is maintained in the order of magnitude of 100 bar during the electrochemical series treatment of the workpieces, and the electrochemical treatment takes place in a plurality of treatment steps with intermediate pauses in which the electrolyte throughflow is maintained and the electrolyte values are measured only in the pauses, wherein the electrolyte flowing to the workpiece (10) originates from an electrolyte reservoir which is acted upon by a compressed gas cushion, and the electrolyte reservoir is subsequently charged by a pump (16) which is switched off at least during the pauses (**P**) between the electrochemical treatment steps (**B**) or is closed off from the electrolyte reservoir.

3. A process for the electrochemical treatment of flow ducts of metallic workpieces according to Claim 1 or 2, **characterized in that** the primary pressure of the electrolyte reservoir (18) drops continuously during the treatment and the varying pressure values are measured during the treatment pauses (**P**) and at the same time the secondary pressure and/or volume throughflow values are measured downstream of the workpiece (10), the measured values are temporarily stored in a computer and compared with the corresponding values of a stored sample of characteristic lines and are converted into a nominal primary pressure, the secondary calculation value of which determines the conclusion of the treatment.

4. A process for the electrochemical treatment of flow ducts of metallic workpieces according to one of Claims 1 to 3, **characterized in that** a throttle point (30) is arranged downstream of the workpiece (10) in the electrolyte flow path, and the pressure of the electrolyte is measured upstream of the throttle point (30) and optionally after being converted to a nominal primary pressure is used as a criterion for switching off the electrochemical treatment.

5. A process for the electrochemical treatment of flow ducts of metallic workpieces according to Claim 1 or 2, **characterized in that** the electrolyte reservoir is connected to a gas-pressure chamber (24) which is charged by a compressor to a higher pressure level than is present in the electrolyte reservoir, a pressure-reduction valve which maintains a constant primary pressure in the electrolyte reservoir is arranged between the said electrolyte reservoir and the gas-pressure chamber, and the compressor is switched off at least during the treatment pauses (**P**) or is closed off from the gas-pressure chamber (24).

## Revendications

1. Procédé d'usinage électrochimique de canaux d'écoulement dans des pièces métalliques, en particulier de corps de tuyère présentant des canaux d'écoulement étroits, à l'aide d'outils plongeant dans ceux-ci et d'un courant d'électrolyte entre l'outil et le canal d'écoulement, dans lequel une pièce (10) est usinée électrochimiquement au cours d'une opération d'essai et au moins l'une des valeurs physiques de l'électrolyte, comprenant le débit en volume de l'électrolyte et sa pression, est mesurée et mémorisée temporairement et la pièce (10) est calibrée à l'aide d'huile d'essai sous haute pression en déterminant le débit réel et en le comparant avec un débit de consigne et en réalisant, en cas d'écarts entre les deux valeurs de débit, d'autres opérations d'essai jusqu'à ce que, lors du calibrage, le débit réel corresponde au débit de consigne, la valeur de l'électrolyte déterminée lors de la dernière opération d'essai étant mémorisée comme valeur de consigne et utilisée, dans l'usinage en série successif des pièces (10), comme grandeur réglée pour terminer les usinages, la pression de l'électrolyte étant, pendant l'usinage électrochimique au cours des opérations d'essai et de l'usinage en série, maintenue de l'ordre de grandeur de 100 bars et l'usinage électrochimique s'effectuant en plusieurs étapes d'usinage avec des pauses entre celles-ci au cours desquelles le débit d'électrolyte est maintenu et la mesure des valeurs de l'électrolytique ne s'effectuant que pendant les pauses, l'électrolyte circulant vers la pièce (10) provenant d'une réserve d'électrolyte se trouvant sous un coussin de gaz comprimé et la réserve d'électrolyte étant complétée par une pompe (16) qui est, au moins pendant les pauses (P) entre les étapes d'usinage électrochimique (B), arrêtée ou déconnectée de la réserve d'électrolyte

2. Procédé d'usinage électrochimique de canaux d'écoulement dans des pièces métalliques, en particulier de corps de tuyère présentant des canaux d'écoulement étroits, à l'aide d'outils plongeant dans ceux-ci et d'un courant d'électrolyte entre l'outil et le canal d'écoulement, dans lequel au moins l'une des valeurs physiques du courant d'électrolyte, comprenant le débit en volume de l'électrolyte et sa pression, est mesurée sur un modèle de référence préalablement calibré à l'aide d'huile d'essai et la valeur déterminée de l'électrolyte est mémorisée comme valeur de consigne et utilisée, dans l'usinage en série successif des pièces (10), comme grandeur réglée pour terminer les usinages, la pression de l'électrolyte étant, pendant l'usinage électrochimique en série des pièces, maintenue de l'ordre de grandeur de 100 bars et l'usinage électrochimique s'effectuant en plusieurs étapes d'usinage avec des pauses entre celles-ci au cours desquelles le débit d'électrolyte est maintenu et la mesure des valeurs de l'électrolytique ne s'effectuant que pendant les pauses, l'électrolyte circulant vers la pièce (10) provenant d'une réserve d'électrolyte se trouvant sous un coussin de gaz comprimé et la réserve d'électrolyte étant complétée par une pompe (16) qui est, au moins pendant les pauses (P) entre les étapes d'usinage électrochimique (B), arrêtée ou déconnectée de la réserve d'électrolyte.

3. Procédé d'usinage électrochimique de canaux d'écoulement dans des pièces métalliques, suivant la revendication 1 ou 2, caractérisé par le fait que la pression primaire de la réserve d'électrolyte (18) diminue constamment pendant l'usinage et que l'on mesure les valeurs de pression changeantes au cours des pauses d'usinage (P) et en même temps les valeurs de pression du côté secondaire et/ou de débit de volume en aval de la pièce (10), que les valeurs mesurées sont temporairement mémorisées dans un ordinateur et comparées aux valeurs correspondantes d'un échantillon caractéristique mémorisé et converties sur base d'une pression primaire de consigne dont la valeur de calcul du côté secondaire détermine la fin de l'usinage.

4. Procédé d'usinage électrochimique de canaux d'écoulement dans des pièces métalliques, suivant l'une des revendications 1 à 3, caractérisé par le fait que dans la trajectoire de l'électrolyte est raccordé après la pièce (10) un étranglement (30) et que la pression de l'électrolyte est mesurée avant l'étranglement (30) et utilisée, éventuellement après conversion sur base d'une pression primaire de consigne, comme critère d'arrêt de l'usinage électrochimique.

5. Procédé d'usinage électrochimique de canaux d'écoulement dans des pièces métalliques, suivant la revendication 1 ou 2, caractérisé par le fait que la réserve d'électrolyte est raccordée à un réservoir à gaz sous pression (24) qui est chargé par un compresseur à un niveau de pression supérieur à celui régnant dans la réserve d'électrolyte, qu'entre celle-ci et le réservoir de gaz sous pression est disposé un manodétendeur qui maintient dans la réserve d'électrolyte une pression primaire constante et que le compresseur est arrêté ou déconnecté du réservoir de gaz sous pression (24) au moins pendant les pauses d'usinage (P).
